# EUROPÄISCHE PATENTSCHRIFT

(11) **EP 3 276 909 B1**
(45) Veröffentlichungstag und Bekanntmachung des Hinweises auf die Patenterteilung: **25.03.2020**
(21) Anmeldenummer: 17001286.8
(22) Anmeldetag: 26.07.2017
(51) Int. Cl.: H04L 29/06, G06F 21/44

(54) **AUTHENTISIERUNGSANORDNUNG**
AUTHENTICATION SYSTEM
DISPOSITIF D'AUTHENTIFICATION

(30) Priorität: 29.07.2016 DE 102016009258
(43) Veröffentlichungstag der Anmeldung: 31.01.2018
(73) Patentinhaber: Giesecke+Devrient Mobile Security GmbH, 81677 München (DE)
(72) Erfinder: Tarantino, Thomas, 83410 Laufen (DE); Fiedler, Michael, 81369 München (DE)

(56) Entgegenhaltungen:
- DE-A1-102013 201 027
- DE-A1-102014 018 861
- DE-U1-212012 000 065
- US-A- 5 777 903
- Anonymous: "Transaktionsnummer - Wikipedia", , 21. Juli 2016 (2016-07-21), XP055421076, Gefunden im Internet: URL:https://de.wikipedia.org/w/index.php?t itle=Transaktionsnummer&oldid=156329161 [gefunden am 2017-11-02]

## Beschreibung

Die vorliegende Erfindung ist gerichtet auf ein Verfahren zum Authentisieren eines Sicherheitselements bzw. eines Wertdokuments und ermöglicht es, dass sich Benutzer mittels einer Kommunikationsschnittstelle von einer Verifikationsstelle bzw. einer Authentisierungsstelle entfernt ausweisen können. Die vorliegende Erfindung ist ferner gerichtet auf eine entsprechend eingerichtete Authentisierungsanordnung sowie auf ein Computerprogrammprodukt mit Steuerbefehlen, welche das Verfahren implementieren bzw. die vorgeschlagene Authentisierungsanordnung betreiben.

DE 212012000065 U1 zeigt ein Token für eine starke Authentisierung für die Erzeugung dynamischer Sicherheitswerte unter Verwendung von akustischen und optischen Signalen.

EP 2338126 B1 zeigt ein Verfahren für einen portablen Datenträger zur Freigabe von für eine Abarbeitung ausgewählten Transaktionsdaten. Hierbei werden Melodien akustisch überlagert.

EP 1333406 A1 zeigt ein Verfahren zur Prüfung einer Berechtigung eines Nutzers eines Endgerätes, wobei von einer Signalerkennungseinrichtung ein vom Endgerät akustisch übermitteltes Signal verglichen wird.

EP 2559563 A1 zeigt ein Sicherheitsverfahren mit optischen Merkmalen, wobei ein Bild bereitgestellt wird, welches in weiteren Verfahrensschritten optisch unterteilt wird. Diese Teilbilder werden dann auf durchsichtigen Teilelementen eines Wertdokuments derart angeordnet, dass diese in ihrer Durchschau das Gesamtbild ergeben.

DE 10 2014 018861 A1 offenbart verschiedene Verfahren zum onlineauthentisieren eines Sicherheitsmerkmals, das auf einem Dokument angeordnet ist, wobei die Verfahren mit haushaltsüblicher Hardware und insbesondere ohne speziellen Kartenleser auskommen.

XP055421076 zitiert den Wikipedia-Artikel mit dem Titel "Transaktionsnummer", welcher unter anderem das das im Online-Banking weit verbreitete Chip-Tan Verfahren offenbart.

Es sind aus dem Stand der Technik diverse Wertdokumente bekannt, welche einen Benutzer gegenüber einer Sicherheitsvorrichtung ausweisen sollen. Hierzu sind Ausweisdokumente bekannt, welche beispielsweise ein Lichtbild eines Ausweisinhabers mitsamt personalisierten Daten aufweisen. Die Authentisierung erfolgt hier derart, dass ein Karteninhaber die entsprechende Karte bzw. das Wertdokument physisch bereitstellt bzw. aushändigt. Hierbei kann nunmehr typischerweise von einem Menschen überprüft werden, ob die hinterlegten biometrischen Merkmalen mit den Merkmalen des tatsächlichen Karteninhabers übereinstimmen. Hierzu kann sich der prüfende Mensch weiterer technischer Endgeräte bedienen, um Sicherheitsmerkmale auszulesen bzw. zu verifizieren.

Ferner sind Authentifizierungssysteme bekannt, welche über eine Datenverbindung durchgeführt werden. Hierzu wird typischerweise ein geheimer Schlüssel und ein öffentlicher Schlüssel benötigt, mit dem die Authentisierung erfolgt. So sind Verfahren bekannt, die beispielsweise als einen öffentlichen Schlüssel eine E-Mail-Adresse oder einen Benutzernamen benötigen und ferner als einen geheimen Schlüssel eine PIN bzw. ein Passwort benötigen. Hierbei ist es jedoch nicht möglich, auf den Anwender an sich abzustellen. Vielmehr kann der Fall eintreten, dass ein unberechtigter Benutzer ein Passwort erspäht und somit unberechtigterweise ein Benutzerkonto für sensible Daten bzw. einen sensiblen Dienst freischalten kann.

Gemäß dem Stand der Technik ist es somit besonders nachteilig, dass Ausweisdaten bzw. Wertdokumente mit entsprechendem Sicherheitselement typischerweise nicht für eine entfernte Authentisierung, d. h. beispielsweise eine Authentisierung über ein Netzwerk, eingerichtet sind. Bei einer Authentisierung mittels eines Netzwerks ist es ein besonderes Sicherheitsrisiko, dass die verwendeten Hardwarekomponenten allein unter der Administration des Benutzers stehen. Das heißt also, dass keine Zertifizierungsstelle bestimmte, geprüfte Komponenten bereitstellt, wie dies beispielsweise bei einem Bankautomat der Fall ist. Vielmehr bedient sich der Benutzer einer herkömmlichen Internetschnittstelle und hält selbst beispielsweise eine Kamera und einen Bildschirm vor. Auf diese Art und Weise ist es z. B. möglich, dass ein Angreifer Sicherheitsmerkmale fälschlicherweise als seine eigenen vorhält. So kann auch ein Angreifer lediglich ein Bild bzw. ein Video bereitstellen, anhand dessen sich ein Angreifer als ein Benutzer ausgibt, der tatsächlich auf dem Video zu erkennen ist.

Ferner ist es nachteilig, dass es keine breite Akzeptanz von elektronischen Sicherheitsmerkmalen gibt und typischerweise Wertdokumente lediglich einer optischen Prüfung zugänglich sind. Hierbei tritt wiederum das Problem auf, dass bestimmte optisch variable Merkmale nicht einfach mittels einer Kamera ausgelesen werden können. So ist ein Wasserzeichen lediglich in einer Durchschau erkennbar und kann nicht einfach von einer herkömmlichen Kamera verwendet werden.

Es ist somit eine Aufgabe der vorliegenden Erfindung, ein Verfahren bzw. eine Kommunikationsanordnung bereitzustellen, welche es erlauben, dass ein Benutzer mit geringem technischen Aufwand eine sichere Authentisierung durchführen kann. Hierbei soll es möglich sein, dass keinerlei Hardwarekomponenten, welche ausschließlich für dieses Verfahren notwendig wären, vorzuhalten sind. Vielmehr soll eine generische Hardwareausstattung ausreichen, um eine Authentisierung eines Benutzers anhand eines Wertdokuments bzw. eines Sicherheitselements zu erlauben. Es ist ferner eine Aufgabe der vorliegenden Erfindung, ein entsprechendes Computerprogrammprodukt bereitzustellen, mit Steuerbefehlen, welche das vorgeschlagene Verfahren implementieren bzw. die vorgeschlagene Anordnung betreiben.

Die Aufgabe wird gelöst mit dem Gegenstand des Patentanspruchs 1. Weitere vorteilhafte Ausgestaltungen sind in den Unteransprüchen angegeben.

Demgemäß wird ein Verfahren zum Authentisieren eines Sicherheitselements bzw. eines Wertdokuments vorgeschlagen. Es umfasst die Schritte des Bereitstellens mindestens eines Anfragesignals von einer Verifikationsstelle an ein Endgerät mittels eines Netzwerks. Ferner erfolgt ein Auslesen des bereitgestellten Anfragesignals durch ein Sicherheitselements und Erzeugen mindestens eines Antwortsignals durch das Sicherheitselement unter Verwendung des bereitgestellten mindestens einen Anfragesignals. Daraufhin erfolgt ein Übermitteln des erzeugten mindestens einen Antwortsignals von dem Sicherheitselement an die Verifikationsstelle zum Vergleichen des mindestens einen Antwortsignals mit einem abgespeicherten Antwortsignal.

Ein Sicherheitselement kann beispielsweise in einem Wertdokument umfasst sein, es kann sich aber auch bei dem Sicherheitselement um das Wertdokument an sich handeln. Beispielsweise kann als ein Wertdokument bzw. ein Sicherheitselement ein Ausweisdokument verstanden werden, welches weitere Sicherheitsmerkmale umfasst. So können auf einem Ausweisdokument personalisierte Daten, wie beispielsweise ein Lichtbild, hinterlegt sein. Hierbei dient das Lichtbild als ein mögliches Sicherheitselement. Dem Fachmann sind hierbei weitere Sicherheitselemente bekannt, welche auf entsprechenden Wertdokumenten bereitgestellt werden können. Ein Wertdokument bzw. ein Sicherheitselement kann beispielsweise eine Kreditkarte, eine Smartcart oder dergleichen sein. Hierbei ist es erfindungsgemäß vorteilhaft, dass das Sicherheitselement auf weitere Komponenten zurückgreifen kann, wie beispielsweise ein Display, einen Controller, eine Fotodiode, eine LED und eine Batterie. Diese Komponenten können in dem Sicherheitselement verbaut sein oder sind zumindest mit dem Sicherheitselement derart verbunden, dass sich das vorgeschlagene Verfahren implementieren lässt.

Mittels des Authentisierens kann ein Benutzer unter Verwendung dieses Sicherheitselements gegenüber einer Verifikationsstelle seine Identität nachweisen. Beispielsweise wird die Verifikationsstelle von einer Bank bereitgestellt, bei der sich der Benutzer authentisieren will. Hierbei ist es möglich, dass der Benutzer ein Ausweisdokument vorhält und sich somit von der Bank geographisch entfernt identifiziert bzw. authentisiert. Folglich erfolgt erfindungsgemäß ein Nachweisen einer Identität mittels eines Computernetzwerks. Hierbei ist es möglich, dass der Benutzer lediglich seine eigene Hardware betreibt, d. h. dass lediglich typische Netzwerkkomponenten, wie beispielsweise ein Rechner mit Bildschirm und Kamera, betrieben wird. Hierbei ist es besonders vorteilhaft, dass das vorgeschlagene Verfahren ausschließlich mit solchen haushaltstypischen Hardwareeinheiten implementierbar ist, ohne dass die Verifikationsstelle, beispielsweise die Bank, weitere Hardware, wie z. B. Kartenlesegeräte, ausgeben muss.

In einem vorbereitenden Verfahrensschritt erfolgt ein Bereitstellen mindestens eines Anfragesignals von einer Verifikationsstelle an ein Endgerät mittels eines Netzwerks. Bei dem Endgerät kann es sich beispielsweise um einen Rechner mit Bildschirm handeln. Beispielsweise ist hier ein Laptop möglich, welches neben dem Bildschirm auch noch eine Kamera vorhält. Die Verifikationsstelle errechnet hierzu ein Anfragesignal, welches dem Benutzer mittels seines Endgeräts, z. B. dem Bildschirm, bereitgestellt wird. Dies kann mittels einer Datenübertragung über ein Netzwerk, vorzugsweise das Internet, erfolgen.

Nunmehr ist es möglich, das Anfragesignal zu visualisieren und mittels des Endgeräts, beispielsweise einem Bildschirm, derart an das Sicherheitselement bereitzustellen, dass dieses das Anfragesignal auslösen kann. Beispielsweise umfasst das Sicherheitselement eine Sensoranordnung bzw. mindestens einen Sensor, der geeignet ist zum Auslesen des Anfragesignals. Hierbei ist es möglich, dass das Anfragesignal beispielsweise als ein Muster visualisiert wird und zu den Positionen am Bildschirm übermittelt werden, an der das Anfragesignal visualisiert werden soll. Daraufhin kann der Benutzer das Sicherheitselement derart an den Bildschirm halten, dass die Sensoranordnung das bereitgestellte Anfragesignal ausliest. Hierbei ist es möglich, das Anfragesignal derart anzuzeigen, dass das Sicherheitselement mittels Berührungskontakt an dem Endgerät, d. h. an dem Bildschirm, angebracht wird und somit die Auflagefläche des Sicherheitselements an dem Endgerät vorbestimmt ist.

Das Anfragesignal kann gegenüber dem Endgerät spezifizieren, dass an einer bestimmten Position auf dem Endgerät, vorzugsweise einem Bildschirm, ein bestimmtes Muster anzuordnen ist. Daraufhin wird eben dieses Muster an der spezifizierten Position angezeigt, und der Benutzer hält sein Sicherheitselement formschlüssig bzw. formbündig an das erzeugte Muster und liest somit mindestens einen Teil dieses Musters aus. Somit ist ein Übermitteln bzw. Bereitstellen des Anfragesignals von der Verifikationsstelle an das Sicherheitselement über das Endgerät erfolgt.

Da dem Sicherheitselement nunmehr das bereitgestellte Anfragesignal vorliegt, kann dieses in ein Antwortsignal übergeführt werden. Somit erfolgt ein Erzeugen mindestens eines Antwortsignals in Abhängigkeit des bereitgestellten Anfragesignals. Hierzu kann es vorteilhaft sein, dem Sicherheitselement vorab Steuerbefehle bereitzustellen, welche ein Anfragesignal in ein Antwortsignal überführen. So kann die Verifikationsstelle die Sicherheitselemente ausgeben, und diese bereits mit den erforderlichen Komponenten versehen, welche zur Durchführung des erfindungsgemäßen Verfahrens notwendig sind. So ist beispielsweise in dem Sicherheitselement ein Microcontroller vorzusehen, der eingerichtet ist, Anfragesignale in Antwortsignale umzurechnen. Hierbei kann es in einer einfachen Implementierung vorteilhaft sein, dass in einer Tabelle, welche dem Sicherheitselement vorliegt, jedem Anfragesignal ein Antwortsignal zugeordnet ist. Es kann jedoch auch eine Rechenregel geben, die arithmetische Operationen auf den Anfragesignalen durchführt. Hierbei ist es vorteilhaft, dass die Verifikationsstelle Information darüber bereithält, wie ein Anfragesignal in ein Antwortsignal überzuführen ist. Dies ist deshalb vorteilhaft, da die Verifikationsstelle das resultierende Antwortsignal zur Verifikation vorgelegt bekommt und dann abgleichen kann, ob das vorgelegte Antwortsignal dem zu erwartenden, abgespeicherten Antwortsignal entspricht.

Hierzu erfolgt ein Übermitteln des erzeugten mindestens einen Antwortsignals von dem Sicherheitselement an die Verifikationsstelle. Da die Verifikationsstelle bereits vorab Information vorhält, welches Antwortsignal aus dem von einem Anfragesignal zu erwarten ist, kann diese Verifikationsstelle nunmehr überprüfen, ob das errechnete Antwortsignal bzw. das erzeugte Anwortsignal mit dem abgespeicherten, zu erwartenden Antwortsignal im Wesentlichen übereinstimmt.

Hierbei ist es vorteilhaft, dass lediglich diejenigen Sicherheitselemente Anfragesignale in Antwortsignale überführen können, die auch zum Ausführen des vorgeschlagenen Verfahrens berechtigt sind. Werden beispielsweise gefälschte Sicherheitselemente in Umlauf gebracht, so können diese nicht in der richtigen Art und Weise das Anfragesignal in ein Antwortsignal überführen.

Auch ist die Kommunikationsschnittstelle derart gesichert, dass das erfindungsgemäße Verfahren vorzugsweise mittels einer Kamera durchgeführt wird, vor die das Sicherheitselement gehalten wird. Somit kann das tatsächlich echte Sicherheitselement vorgehalten werden und kann dann in Abhängigkeit des Anfragesignals ein Antwortsignal ausgesendet werden. Hält beispielsweise ein Angreifer ein Video vor, so kann auf dem Video zwar das echte Sicherheitselement gezeigt werden, dieses kann jedoch nicht das Erzeugen des mindestens einen Antwortsignals veranlassen, da es in diesem Fall lediglich virtuell vorliegt. Somit ist auch gewährleistet, dass der Benutzer tatsächlich ein physisches Sicherheitselement vorhält.

Gemäß einem Aspekt der vorliegenden Erfindung erfolgt bei einem im Wesentlichen Übereinstimmen des übermittelten mindestens einen Antwortsignals mit einem abgespeicherten Antwortsignal ein positives Authentisieren. Dies hat den Vorteil, dass überprüft wird, ob das erzeugte Antwortsignal mit dem zu erwartenden Antwortsignal übereinstimmt. Da es möglich ist, das Anfragesignal mittels einer Kamera auszulesen bzw. auch das Antwortsignal an das Endgerät derart bereitzustellen, dass das Endgerät das Antwortsignal mit einer Kamera ausliest, ist es vorteilhaft, dass die erzeugten Antwortsignale und die abgespeicherten Antwortsignale lediglich im Wesentlichen übereinstimmen müssen.

Im Wesentlichen heißt hierbei, dass zumindest eine Toleranzschwelle möglich ist, da eine Kamera typischerweise nie ein eindeutiges Bild ergibt, sondern dass stets eine Varianz möglich ist. Eine solche Varianz in einem aufgenommenen Bild kann dadurch verursacht werden, dass das Sicherheitselement schräg bzw. in einem Winkel angeordnet wird, der nicht orthogonal zur Kamera steht. Auf diese Weise kann es zu Abfälschungen kommen, und das Antwortsignal muss nicht vollkommen mit dem abgespeicherten Antwortsignal übereinstimmen. Hierzu kann also ein Toleranzbereich eingestellt werden, der auf die gegebene technische Umgebung Rücksicht nimmt.

Gemäß einem weiteren Aspekt der vorliegenden Erfindung wird das Anfragesignal mittels bildgebender Verfahren durch das Sicherheitselement ausgelesen. Dies hat den Vorteil, dass, falls in dem Sicherheitselement eine Fotodiode bzw. eine Kamera vorhanden ist, das Anfragesignal direkt beispielsweise von einem Bildschirm ausgelesen werden kann. Als ein bildgebendes Verfahren kann ein Abfotografieren bzw. ein Abscannen des Antwortsignals bezeichnet werden.

Gemäß einem weiteren Aspekt der vorliegenden Erfindung weist das Anfragesignal eine Bildschirmposition auf, an der das Anfragesignal angezeigt wird. Dies hat den Vorteil, dass, falls das Endgerät über einen Bildschirm verfügt, in dem Anfragesignal gleich spezifiziert werden kann, wo das Sicherheitselement anzuordnen ist. Beispielsweise wird hierzu mittig in dem Bildschirm ein Umriss des Sicherheitselements angezeigt, woraufhin der Benutzer das Sicherheitselement in diesen Umriss auf dem Bildschirm einpassen kann. Auf diese Art und Weise wird sichergestellt, dass das Sicherheitselement genau das Anfragesignal ausliest. Die Bildschirmposition kann auch einen Hinweis darauf geben, dass das Sicherheitselement beabstandet von dem Bildschirm angeordnet werden kann, der Benutzer aber dennoch den Umriss eines angezeigten Sicherheitselements treffen muss. Beispielsweise wird dem Benutzer hierzu auf dem Bildschirm sein eigenes Bild angezeigt, welches von der Kamera aufgenommen wird. Dort ist dann auch angezeigt, wo das Sicherheitselement entfernt vom Bildschirm zu platzieren ist. Der Benutzer sieht also sein eigenes Bild und sieht, wie er das Sicherheitselement vorhält. Er bewegt nunmehr das Sicherheitselement derart zu dem angezeigten Umriss, dass das tatsächliche Sicherheitselement formschlüssig mit dem virtuellen Umriss übereinstimmt. Daraufhin erfolgt ein Auslesen des bereitgestellten Anfragesignals oder aber auch ein Übermitteln des erzeugten mindestens einen Antwortsignals. Somit kann also die Kommunikation zwischen dem Bildschirm bzw. der Kamera und dem Sicherheitselement derart spezifiziert werden, dass es eindeutig ist, wo das Sicherheitselement vor dem Bildschirm anzuordnen ist.

Gemäß einem weiteren Aspekt der vorliegenden Erfindung beschreibt das Anfragesignal einen Code, ein Muster, ein blinkendes Muster, alphanumerische Daten, ein Symbol, einen QR-Code und/oder einen Barcode. Dies hat den Vorteil, dass diverse Möglichkeiten existieren, wie das Anfragesignal, beispielsweise mittels eines Bildschirms, dem Benutzer angezeigt werden kann. Insbesondere ist es hierdurch möglich, viele unterschiedliche Daten zu codieren und somit sicherzustellen, dass das Anfragesignal einmalig ist bzw. eine große Auswahl von Möglichkeiten für das Anfragesignal besteht, um ein besonders sicheres Verfahren zu implementieren.

Gemäß einem weiteren Aspekt der vorliegenden Erfindung wird das Anfragesignal unter Verwendung einer Fotodiode oder einer Kamera oder allgemein einer bildgebenden Komponente von dem Sicherheitselement ausgelesen. Dies hat den Vorteil, dass das Sicherheitselement über eine eigene Elektronik verfügt, mit der das Anfragesignal von dem Endgerät ausgelesen werden kann. Hierzu ist die Fotodiode oder die Kamera oder allgemein die bildgebende Komponente eingerichtet, das Anfragesignal abzufotografieren bzw. zu erkennen. Somit wird das Anfragesignal dem Sicherheitselement zur weiteren Verarbeitung zugänglich gemacht.

Gemäß einem weiteren Aspekt der vorliegenden Erfindung werden die Verfahrensschritte zumindest teilweise zeitverzögert ausgeführt. Dies hat den Vorteil, dass dem Benutzer Zeit gegeben wird, den einzelnen Anweisungen am Bildschirm zu folgen und insbesondere dem Benutzer Zeit lässt, um beispielsweise das Sicherheitselement ordnungsgemäß anzuordnen. Handelt es sich bei dem Anfragesignal und dem Antwortsignal um optische Elemente, so bedarf der Benutzer einige Zeit zum Auslesen des bereitgestellten Anfragesignals bzw. zum Übermitteln des erzeugten Antwortsignals.

Gemäß einem weiteren Aspekt der vorliegenden Erfindung wird das Antwortsignal mittels mindestens einer LED durch das Sicherheitselement bereitgestellt. Dies hat den Vorteil, dass eine Leuchtdiode LED bereits in das Sicherheitselement integriert werden kann, die den technischen Anforderungen des vorgeschlagenen Verfahrens genügt. Die Leuchtdiode muss hierbei lediglich eingerichtet sein, das erzeugte Antwortsignal des Sicherheitselements beispielsweise an eine Kamera bereitzustellen, welche dann beispielsweise mittels einer Internetverbindung das Antwortsignal an die Verifikationsstelle überträgt. Insbesondere ist es vorteilhaft, dass eine Leuchtdiode in besonders kleiner Bauart bereitgestellt werden kann, und, dass diese lediglich sehr wenig Energie benötigt.

Gemäß einem weiteren Aspekt der vorliegenden Erfindung beschreibt das Antwortsignal einen Code, ein Muster, ein blinkendes Muster, alphanumerische Daten, ein Symbol, einen QR-Code und/oder einen Barcode. Dies hat den Vorteil, dass das Sicherheitsmerkmal ein Antwortsignal erzeugt, welches beispielsweise mittels einer Leuchtdiode direkt oder indirekt an die Verifikationsstelle bereitgestellt werden kann. Insbesondere ist es hierbei möglich, auf bekannte Verfahren zurückzugreifen, welche entsprechende Muster bereitstellen.

Gemäß einem weiteren Aspekt der vorliegenden Erfindung beschreiben das Anfragesignal und das Antwortsignal jeweils mindestens ein akustisches Signal. Dies hat den Vorteil, dass neben den optischen Signalen auch akustische Signale bereitgestellt werden können. Analog ist es möglich, dass das Anfragesignal bereits ein akustisches Signal aufweist, welches an das Endgerät bereitgestellt wird und von dem Sicherheitselement ausgelesen wird. Somit gilt die bereits beschriebene technische Lehre, wobei lediglich durchgängig eine Kamera mit einem Mikrofon zu ersetzen ist und eine Leuchtdiode mit einem Lautsprecher zu ersetzen ist. So kann das Bereitstellen, das Auslesen und das Übermitteln mittels akustischer Signale erfolgen.

Gemäß einem weiteren Aspekt der vorliegenden Erfindung werden das Anfragesignal und das Antwortsignal mittels eines Mikrofons ausgelesen. Dies hat den Vorteil, dass ein weiterer Sicherheitsmechanismus zusätzlich zu den optischen Merkmalen bereitgestellt wird.

Gemäß einem weiteren Aspekt der vorliegenden Erfindung werden das Anfragesignal und das Antwortsignal mittels eines Lautsprechers bereitgestellt. Dies hat den Vorteil, dass ein weiterer Sicherheitsmechanismus implementiert wird, der anhand von typischerweise bereits vorhandenen Hardwarekomponenten implementiert werden kann.

Gemäß einem weiteren Aspekt der vorliegenden Erfindung wird eine Energie mittels Verwendung von Photovoltaikelementen an das Sicherheitselement bereitgestellt. Dies hat den Vorteil, dass das Sicherheitselement Elemente aufweist, die ausgehend von einer Bildschirmstrahlung bzw. einer Monitorstrahlung eingerichtet sind, Energie zu erzeugen. Auf diese Art und Weise ist es möglich, durch das Sicherheitselement an sich selbsttätig Energie zu erzeugen. Alternativ ist es möglich, eine Batterie vorzuhalten. Durch die Verwendung von Photovoltaikelementen ist es möglich, die Chipkarte bzw. das Sicherheitselement theoretisch beliebig oft zu verwenden, da die Energie stets während des Ausführens des Verfahrens bereitgestellt wird, und somit das Sicherheitselement stets mit Strom versorgt ist.

Die Aufgabe wird auch gelöst durch eine Authentisierungsanordnung zum Authentisieren eines Sicherheitselements, mit einer Schnittstelleneinheit eingerichtet zum Bereitstellen mindestens eines Anfragesignals von einer Verifikationsstelle an ein Endgerät mittels eines Netzwerks. Ferner ist eine Sensoreinheit vorgesehen, welche eingerichtet ist zum Auslesen des bereitgestellten Anfragesignals durch ein Sicherheitselement und eine Recheneinheit, eingerichtet zum Erzeugen mindestens eines Antwortsignals durch das Sicherheitselement unter Verwendung des bereitgestellten mindestens einen Anfragesignals. Ferner ist die Schnittstelle eingerichtet zum Übermitteln des erzeugten mindestens einen Antwortsignals von dem Sicherheitselement an die Verifikationsstelle zum Vergleichen des mindestens einen Antwortsignals mit einem abgespeicherten Antwortsignal.

Bei dieser Schnittstelleneinheit kann es sich um die gleiche Schnittstelleneinheit handeln, die eingerichtet ist zum Bereitstellen des mindestens einen Anfragesignals. Typischerweise wird hierzu jedoch eine weitere Schnittstelleneinheit vorgesehen. Die Sensoreinheit kann als eine Fotodiode bzw. mehrere Fotodioden vorliegen und kann optional ein Mikrofon beinhalten.

Die Aufgabe wird auch gelöst durch ein Computerprogrammprodukt mit Steuerbefehlen, welche das vorgeschlagene Verfahren implementieren bzw. die vorgeschlagene Authentisierungsanordnung betreiben.

Die Erfindung ist ferner gerichtet auf ein Sicherheitselement an sich bzw. ein Wertdokument. Dieses Sicherheitselement bzw. das Wertdokument ist eingerichtet, das vorgeschlagene Verfahren zumindest teilweise zu betreiben.

Ferner ist es besonders vorteilhaft, dass die Authentisierungsanordnung strukturelle Merkmale bereitstellt, welche auch als Verfahrensschritte implementiert werden können. Ferner können auch die Verfahrensschritte als strukturelle Merkmale implementiert werden, derart, dass für jeden Verfahrensschritt ein physisches Merkmal in der Authentisierungsanordnung vorgesehen ist. Das Computerprogrammprodukt ist eingerichtet, das vorgeschlagene Verfahren zu implementieren bzw. die Authentisierungsanordnung zu betreiben.

Im Weiteren werden vorteilhafte Aspekte anhand der beigefügten Figuren erläutert. Es zeigt.
- Fig. 1A:: ein Anwendungsszenario der vorgeschlagenen Authentisierungsanordnung gemäß einem Aspekt der vorliegenden Erfindung;
- Fig. 1B:: ein Sicherheitselement bzw. ein Wertdokument gemäß einem Aspekt der vorliegenden Erfindung;
- Fig. 2:: ein Verfahren zum entfernten Authentisieren eines Sicherheitselementes gemäß einem Aspekt der vorliegenden Erfindung; und
- Fig. 3:: ein Verfahren zum Authentisieren gemäß einem weiteren Aspekt der vorliegenden Erfindung.

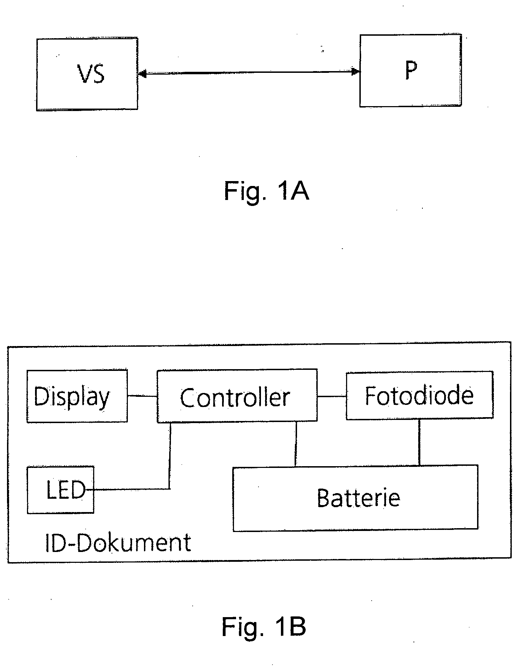

Fig. 1A zeigt eine Verifikationsstelle VS, gegenüber der sich eine Person P authentisieren soll. Hierbei ist es möglich, dass ein Nachrichtenaustausch zwischen der Verifikationsstelle VS und der Person P derart erfolgen muss, dass ein sicheres Authentisieren, beispielsweise mittels eines Ausweisdokuments, durchgeführt wird. Hier ist es besonders notwendig, dass der Nachrichtenaustausch, welcher vorliegend mittels eines bidirektionalen Pfeils eingezeichnet ist, nicht verfälscht wird bzw. ein zuverlässiges Authentisieren ermöglicht, da die Person P über eine eigene Hardware verfügt und diese administriert. Es soll somit eine sichere Online-Authentifizierung ermöglicht werden und hierzu die vorhandene Infrastruktur auf Seiten der Person P verwendet werden, und auch, wenn möglich, eine automatische Authentifizierung auf Seiten der Authentifizierungsstelle soll ermöglicht werden.

Zur Verifikation einer Identität schickt die Verifikationsstelle VS ein optisches Signal an den Bildschirm der zu verifizierenden Person P. Diese hält ihre Karte, z. B. einen Personalausweis, an den Bildschirm auf das übertragende optische Signal, z. B. eine oder mehrere blinkende Flächen. Hierbei muss die in der Karte befindliche Fotodiode, mindestens eine Fotodiode, in Deckung mit dem optischen Signal auf dem Bildschirm gebracht werden.

Optional können auch größere Flächen auf dem Bildschirm blinken und die Karte in einem Abstand zu dem Bildschirm gehalten werden. Hierbei wäre aber die Beschränkung auf eine Fotodiode nötig. Wenn die Karte und Lichtquelle in Deckung gebracht wurden, wird ein Code von der Verifikationsstelle VS übertragen, welcher von der einen oder mehreren Fotodiode(n) empfangen wird und welcher dann von dem in der Karte befindlichen Microcontroller verarbeitet wird. Der Microcontroller kann entweder der Sicherheitsmicrocontroller oder auch ein separater ASIC sein. Der Microcontroller generiert eine Antwort und steuert ein optisches Element, z. B. eine LED oder mehrere LEDs und/oder ein Display mit alphanumerischen Daten, Symbolen, Barcodes oder dergleichen. Die Information wird dann von der Kamera des Clients aufgenommen und an die zu verifizierende Seite übertragen. Hierzu kann die Generierung der Antwort zeitverzögert erfolgen, um Challenge und Response auf nutzerfreundliche Weise zu trennen.

Die zu verifizierende Stelle kennt die Antwort und kann die Echtheit des Dokuments überprüfen. Dies kann auch automatisch ohne eine Person P auf der verifizierenden Stelle erfolgen, weil die Gesichtsüberprüfung und die Sicherheitsantwort automatisch verarbeitet werden können.

Additiv zu optischen Signalen können auch akustische Signale verarbeitet werden. Hierzu kann in der Karte ein Mikrofon und ein Lautsprecher integriert sein. Genauso benötigt auch der Bildschirm auf der zu verifizierenden Seite einen Lautsprecher und ein Mikrofon.

Um die Elektronik zu betreiben, befindet sich idealerweise eine Energieversorgung auf der Karte, weil dann ein Offline-Betrieb ohne zusätzliche Leser möglich ist. Alternativ kann für leistungsarme Schaltungen Energie aus Photovoltaikelementen durch die Bildschirmbeleuchtung erzeugt werden.

Somit kann eine automatische Authentifizierung durchgeführt werden, und die Karte kann ohne zusätzliche Hilfsmittel authentifiziert werden. Alternativ kann bei manueller Überprüfung der übertragene Code maschinengeneriert sein, so dass der Prüfer ihn nicht beeinflussen kann oder kennt. Die serviceseitige Prüfung vergleicht dann die erwartete mit der erfolgten Antwort. Dies verhindert Insiderangriffe.

Fig. 1B zeigt ein solches Sicherheitsheitselement, welches beispielsweise ein Display, ein LED, einen Controller, eine Fotodiode und eine Batterie aufweist. Anstatt der Batterie kann auch ein Photovoltaikelement vorgesehen sein. Die Fotodiode ist eingerichtet, das bereitgestellte Anfragesignal auszulesen, und der Controller erzeugt mindestens ein Antwortsignal unter Verwendung des bereitgestellten mindestens einen Anfragesignals. Dieses erzeugte Antwortsignal kann mittels der LED codiert werden und kann somit wiederum an eine Kamera des Endgeräts, also des Laptops, übermittelt werden. Somit ist die vorliegende Erfindung auch gerichtet auf ein entsprechend eingerichtetes Sicherheitselement bzw. ein Wertdokument. Vorliegend wird ein Wertdokument als ein ID-Dokument bezeichnet.

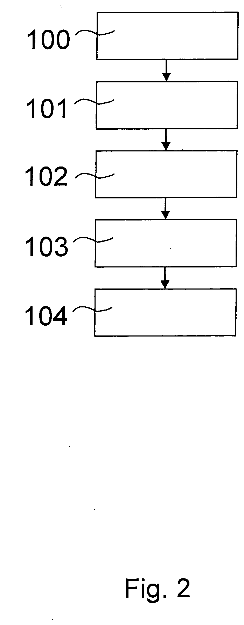

Fig. 2 zeigt ein Verfahren zum Authentisieren eines Sicherheitselements, mit den Schritten des Bereitstellens 100 mindestens eines Anfragesignals von einer Verifikationsstelle an ein Endgerät mittels eines Netzwerks sowie ein Auslesen 101 des bereitgestellten Anfragesignals durch das Sicherheitselement und Erzeugen 102 mindestens eines Antwortsignals durch das Sicherheitselement unter Verwendung des bereitgestellten mindestens einen Anfragesignals. Ferner erfolgt ein Übermitteln 103 des erzeugten mindestens einen Antwortsignals von dem Sicherheitselement an die Verifikationsstelle zum Vergleichen 104 des mindestens einen Antwortsignals mit einem abgespeicherten Antwortsignal.

Der Fachmann erkennt hierbei, dass die Schritte teils iterativ ausgeführt werden können und, dass teilweise Unterschritte notwendig sind.

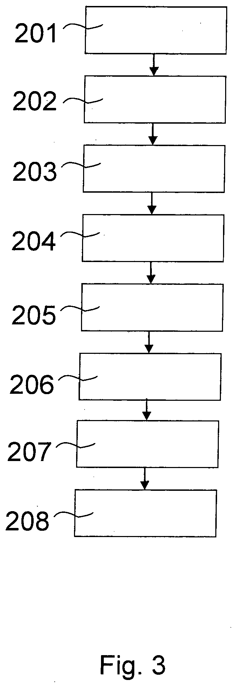

Fig. 3 zeigt ein schematisches Ablaufdiagramm gemäß einem Aspekt der vorliegenden Erfindung. In einem ersten Verfahrensschritt 201 erfolgt ein Initialisieren einer Online-Authentisierung eines Bankkunden über einen optischen Kanal. Zur Prüfung der Echtheit eines ID-Dokuments sendet die Verifikationsstelle, z. B. eine Bank, ein Signal, das am Monitor einer zu verifizierenden Person, z. B. dem Kunden, angezeigt wird, was vorliegend als Verfahrensschritt 202 bezeichnet wird.

In einem darauffolgenden Verfahrensschritt 203 hält die Person ihr ID-Dokument an den Monitor auf das angezeigte Signal, z. B. eine blinkende Fläche. In einem weiteren Verfahrensschritt 204 überträgt die Verifikationsstelle einen Code, der am Monitor angezeigt wird und von dem Sicherheitselement mittels Fotodioden empfangen wird. Darauf erfolgt in einem Verfahrensschritt 205 ein Verarbeiten des empfangenen Codes von dem Sicherheitselement zu einem neuen Code. Der neue Code wird von den LEDs des IDs angezeigt und von der Kamera, z. B. des Monitors, erfasst und an die Verifikationsstelle übertragen, was vorliegend als Verfahrensschritt 206 bezeichnet wird. In einem darauffolgenden Verfahrensschritt 207 erkennt die Verifikationsstelle diesen neuen Code und kann die Echtheit des Sicherheitselements bzw. des Wertdokuments automatisch prüfen. In einem weiteren, optionalen Verfahrensschritt 208 prüft die Verifikationsstelle die Identität des Kunden mittels Kameraaufnahmen des Gesichts des Kundens. Dies kann optional erfolgen, kann aber auch parallel zu den obengenannten Verfahrensschritten erfolgen.

Der Vorteil hierbei ist, dass neben der Prüfung des Gesichts des Kunden zur Identifizierung die Verifikationsstelle parallel dazu automatisch die ID bzw. das Sicherheitselement prüfen kann und somit der Kunde sich authentisieren kann.

Somit wurde ein besonders vorteilhaftes Verfahren und eine besonders vorteilhafte Authentisierungsanordnung vorgeschlagen, welche sowohl ein sicheres Authentisieren ermöglichen, als auch auf bestehende Hardware aufbauen können.

## Patentansprüche

1. Verfahren zum Authentisieren eines Sicherheitselements, mit den Schritten:
- Bereitstellen (100) mindestens eines Anfragesignals von einer Verifikationsstelle (VS) an ein Endgerät mittels eines Netzwerks;
- Auslesen (101) des bereitgestellten Anfragesignals durch das Sicherheitselement und Erzeugen (102) mindestens eines Antwortsignals durch das Sicherheitselement unter Verwendung des bereitgestellten mindestens einen Anfragesignals; und
- Übermitteln (103) des erzeugten mindestens einen Antwortsignals von dem Sicherheitselement an die Verifikationsstelle (VS) zum Vergleichen (104) des mindestens einen Antwortsignals mit einem abgespeicherten Antwortsignal,
**dadurch gekennzeichnet, dass** bei einem Übereinstimmen des übermittelten mindestens einen Antwortsignals mit einem abgespeicherten Antwortsignal ein positives Authentisieren erfolgt,
wobei das Anfragesignal mittels bildgebender Verfahren durch das Sicherheitselement ausgelesen wird,
wobei das Anfragesignal eine Bildschirmposition aufweist, an der das Anfragesignal angezeigt wird,
wobei das Antwortsignal mittels mindestens einer LED durch das Sicherheitselement bereitgestellt wird,
wobei das Antwortsignal des Sicherheitselements an eine Kamera bereit gestellt wird, wobei die Kamera mittels einer Internetverbindung das Antwortsignal an die Verifikationsstelle überträgt.

2. Verfahren nach einem der vorhergehenden Ansprüche, **dadurch gekennzeichnet, dass** das Anfragesignal einen Code, ein Muster, ein blinkendes Muster, alphanumerische Daten, ein Symbol, einen QR-Code und/ oder einen Barcode beschreibt.

3. Verfahren nach einem der vorhergehenden Ansprüche, **dadurch gekennzeichnet, dass** das Anfragesignal unter Verwendung einer Fotodiode von dem Sicherheitselement ausgelesen wird.

4. Verfahren nach einem der vorhergehenden Ansprüche, **dadurch gekennzeichnet, dass** die Verfahrensschritte zumindest teilweise zeitverzögert ausgeführt werden.

5. Verfahren nach einem der vorhergehenden Ansprüche, **dadurch gekennzeichnet, dass** das Antwortsignal einen Code, ein Muster, ein blinkendes Muster, alphanumerische Daten, ein Symbol, einen QR-Code und/ oder einen Barcode beschreibt.

6. Verfahren nach einem der vorhergehenden Ansprüche, **dadurch gekennzeichnet, dass** eine Energie mittels Verwendung von Photovoltaikelementen an das Sicherheitselement bereitgestellt wird.

7. Authentisierungsanordnung zum Authentisieren eines Sicherheitselements gemäß Ansprüchen 1 bis 6, mit:
- einer Schnittstelleneinheit eingerichtet zum Bereitstellen (100) mindestens eines Anfragesignals von einer Verifikationsstelle (VS) an ein Endgerät mittels eines Netzwerks;
- einer Sensoreinheit eingerichtet zum Auslesen (101) des bereitgestellten Anfragesignals durch das Sicherheitselement und einer Recheneinheit eingerichtet zum Erzeugen (102) mindestens eines Antwortsignals durch das Sicherheitselement unter Verwendung des bereitgestellten mindestens einen Anfragesignals; und
- einer weiteren Schnittstelleneinheit eingerichtet zum Übermitteln (103) des erzeugten mindestens einen Antwortsignals von dem Sicherheitselement an die Verifikationsstelle (VS) zum Vergleichen (104) des mindestens einen Antwortsignals mit einem abgespeicherten Antwortsignal.

8. Computerprogrammprodukt mit Steuerbefehlen, welche das Verfahren gemäß einem der Ansprüche 1 bis 6 implementieren.

## Claims

1. A method for authenticating a security element, with the steps:
- supplying (100) at least one request signal from a verification point (VS) to an end device by means of a network;
- reading out (101) the supplied request signal by the security element and generating (102) at least one response signal by the security element while employing the supplied at least one request signal; and
- transmitting (103) the generated at least one response signal from the security element to the verification point (VS) for comparing (104) the at least one response signal with a stored response signal,
**characterized in that** upon a matching of the transmitted at least one response signal with a stored response signal, a positive authenticating is effected,
wherein the request signal is read out by the security element by means of imaging methods,
wherein the request signal has a screen position in which the request signal is displayed,
wherein the response signal is supplied by the security element by means of at least one LED,
wherein the response signal of the security element is supplied to a camera, wherein the camera transfers the response signal to the verification point by means of the internet connection.

2. The method according to any of the preceding claims, **characterized in that** the request signal describes a code, a pattern, a flashing pattern, alphanumeric data, a symbol, a QR code and/or a bar code.

3. The method according to any of the preceding claims, **characterized in that** the request signal is read out from the security element while employing a photodiode.

4. The method according to any of the preceding claims, **characterized in that** the method steps are executed at least partly with a time delay.

5. The method according to any of the preceding claims, **characterized in that** the response signal describes a code, a pattern, a flashing pattern, alphanumeric data, a symbol, a QR code and/or a bar code.

6. The method according to any of the preceding claims, **characterized in that** an energy is supplied to the security element by means of employment of photovoltaic elements.

7. An authentication arrangement for authenticating a security element according to claims 1 to 6, having:
an interface unit adapted for supplying (100) at least one request signal from a verification point (VS) to an end device by means of a network;
a sensor unit adapted for reading out (101) the supplied request signal by the security element and a computing unit adapted for generating (102) at least one response signal by the security element while employing the supplied at least one request signal; and
a further interface unit adapted for transmitting (103) the generated at least one response signal from the security element to the verification point (VS) for comparing (104) the at least one response signal with a stored response signal.

8. A computer program product having control commands which implement the method according to any of claims 1 to 6.

## Revendications

1. Procédé d'authentification d'un élément de sécurité, comprenant les étapes :
- mise à disposition (100) d'au moins un signal de demande d'un poste de vérification (VS) à un terminal au moyen d'un réseau ;
- lecture (101), par l'élément de sécurité, du signal de demande mis à disposition, et génération (102) d'au moins un signal de réponse par l'élément de sécurité en utilisant le au moins un signal de demande mis à disposition ; et
- transmission (103), de l'élément de sécurité au poste de vérification (VS), du au moins un signal de réponse généré pour la comparaison (104) du au moins un signal de réponse avec un signal de réponse mémorisé,
**caractérisé en ce que**, en cas de concordance entre le au moins un signal de réponse transmis et un signal de réponse mémorisé, une authentification positive a lieu,
cependant que le signal de demande est lu par l'élément de sécurité par procédé d'imagerie,
cependant que le signal de demande présente une position d'écran à laquelle le signal de demande est affiché,
cependant que le signal de réponse est mis à disposition par l'élément de sécurité au moyen d'au moins une LED,
cependant que le signal de réponse de l'élément de sécurité est mis à la disposition d'une caméra, cependant que la caméra transfère le signal de réponse au poste de vérification au moyen d'une connexion Internet.

2. Procédé selon une des revendications précédentes, **caractérisé en ce que** le signal de demande décrit un code, un motif, un motif clignotant, des données alphanumériques, un symbole, un code QR et/ou un code-barres.

3. Procédé selon une des revendications précédentes, **caractérisé en ce que** le signal de demande est lu par l'élément de sécurité en utilisant une photodiode.

4. Procédé selon une des revendications précédentes, **caractérisé en ce que** les étapes du procédé sont exécutées au moins partiellement de manière différée.

5. Procédé selon une des revendications précédentes, **caractérisé en ce que** le signal de réponse décrit un code, un motif, un motif clignotant, des données alphanumériques, un symbole, un code QR et/ou un code-barres.

6. Procédé selon une des revendications précédentes, **caractérisé en ce qu'**une énergie est mise à la disposition de l'élément de sécurité au moyen de l'utilisation d'éléments photovoltaïques.

7. Agencement d'authentification, destiné à l'authentification d'un élément de sécurité selon les revendications de 1 à 6, comprenant :
- une unité d'interface conçue pour la mise à disposition (100) d'au moins un signal de demande d'un poste de vérification (VS) à un terminal au moyen d'un réseau ;
- une unité de capteur conçue pour la lecture (101), par l'élément de sécurité, du signal de demande mis à disposition, et une unité de calcul conçue pour la génération (102), par l'élément de sécurité, d'au moins un signal de réponse en utilisant le au moins un signal de demande mis à disposition ; et
- une autre unité d'interface conçue pour la transmission (103), de l'élément de sécurité au poste de vérification (VS), du au moins un signal de réponse généré pour la comparaison (104) du au moins un signal de réponse avec un signal de réponse mémorisé.

8. Produit programme d'ordinateur ayant des instructions de commande qui mettent en œuvre le procédé selon une des revendications de 1 à 6.
